# EUROPÄISCHE PATENTSCHRIFT

(11) **EP 3 452 741 B1**
(45) Veröffentlichungstag und Bekanntmachung des Hinweises auf die Patenterteilung: **26.08.2020**
(21) Anmeldenummer: 17715478.8
(22) Anmeldetag: 04.04.2017
(51) Int. Cl.: F16H 57/04, F16H 1/20, F16H 1/14

(54) **GETRIEBE MIT EINER AN EINEM TELLERRAD DES GETRIEBES MECHANISCH ANGETRIEBENEN PUMPE**
TRANSMISSION COMPRISING A PUMP MECHANICALLY DRIVEN ON A RING GEAR OF THE TRANSMISSION
BOÎTE DE VITESSES ÉQUIPÉE D'UNE POMPE ENTRAÎNÉE MÉCANIQUEMENT SUR UNE COURONNE DE DIFFÉRENTIEL DE LADITE BOÎTE

(30) Priorität: 04.05.2016 DE 102016207696
(43) Veröffentlichungstag der Anmeldung: 13.03.2019
(73) Patentinhaber: ZF Friedrichshafen AG, 88046 Friedrichshafen (DE)
(72) Erfinder: GUERRA, Fabio, 88048 Friedrichshafen (DE); NIEDERMEIER, Hans-Peter, 88085 Langenargen (DE); ZITZELSBERGER, Florian, 94136 Thyrnau (DE); MAHLER, Milos, 85653 Großhelfendorf (DE)
(74) Vertreter: ZF Friedrichshafen AG
(86) Internationale Anmeldenummer: PCT/EP2017/058004
(87) Internationale Veröffentlichungsnummer: WO 2017/190903

(56) Entgegenhaltungen:
- EP-A1- 0 084 197
- EP-A1- 0 084 197
- EP-A1- 2 602 515
- EP-A1- 2 602 515
- DE-C1- 19 938 415
- DE-C1- 19 938 415
- GB-A- 940 024
- US-A- 2 655 055
- US-A- 2 655 055
- US-A- 3 034 322
- US-A- 3 034 322
- US-A- 3 724 289
- US-A- 3 724 289

## Beschreibung

Die vorliegende Erfindung betrifft ein Getriebe für ein Kraftfahrzeug, insbesondere für ein Elektrofahrzeug, gemäß der im Patentanspruch 1 näher definierten Art.

Aus der WO 2006/123079 A2 ist ein Getriebe für einen Motor eines Kraftfahrzeuges bekannt, das zumindest eine ölbetriebene Lamellenkupplung umfasst. Des Weiteren weist das Getriebe eine Ölpumpe zum Steuern der Lamellenkupplung auf. Die Ölpumpe ist über ein Kegelrad, das in eine Verzahnung einer Vorgelegewelle des Getriebes einkämmt, mechanisch angetrieben. Nachteilig hierbei ist, dass ein zusätzliches Verzahnungspaar benötigt wird, um die Ölpumpe mechanisch antreiben zu können. Infolgedessen weisen derartige Getriebe ein erhöhtes Gewicht und erhöhte Herstellungskosten auf.

Ferner ist aus der US 3 724 289 A ein Getriebe für ein Kraftfahrzeug bekannt. Dieses Getriebe umfasst ein Tellerrad, ein in das Tellerrad in einem ersten Eingriffsbereich einkämmendes Ritzel und eine mechanisch antreibbare Pumpe. Die Pumpe weist ein Pumpenritzel auf, das zusätzlich zu dem genannten Ritzel in einem zweiten Eingriffsbereich unmittelbar in das Tellerrad einkämmt. Der erste und der zweite Eingriffsbereich sind an sich gegenüberliegenden Seiten des Tellerrads angeordnet. Sie sind also in Umfangsrichtung des Tellerrades zueinander beabstandet.

Aufgabe der vorliegenden Erfindung ist es somit, ein gewichtsreduziertes und/oder in der Herstellung kostengünstiges Getriebe zu schaffen.

Die der Erfindung zu Grunde liegende Aufgabe wird durch die Merkmale des Patentanspruchs 1 gelöst. Weitere vorteilhafte Ausgestaltungen ergeben sich aus den Unteransprüchen.

Es wird ein Getriebe vorgeschlagen, das ein Tellerrad und ein Ritzel, insbesondere ein Kegelritzel, aufweist, das in das Tellerrad in einem ersten Eingriffsbereich einkämmt. Das Getriebe ist insbesondere für den Einbau in ein Kraftfahrzeug, vorzugsweise in ein Elektrofahrzeug, vorgesehen. Diesbezüglich ist es ferner insbesondere zur Kopplung mit einem Motor, vorzugsweise einem Elektromotor, geeignet. Bei dem Elektrofahrzeug kann es sich beispielsweise um ein Schienenfahrzeug handeln, das von einem Elektromotor angetrieben wird. Des Weiteren ist das Getriebe vorzugsweise einstufig ausgebildet, wobei diese Stufe durch das Tellerrad und das in dieses eingreifende Ritzel ausgebildet ist. Ferner handelt es sich bei dem Getriebe vorzugsweise um ein Winkelgetriebe, insbesondere ein Kegelradgetriebe und/oder Hypoidgetriebe.

Neben dem Tellerrad und dem Ritzel weist das Getriebe des Weiteren eine mechanisch antreibbare Pumpe auf. Die Pumpe umfasst ein Pumpenritzel, das zusätzlich zum Ritzel in einem zweiten Eingriffsbereich unmittelbar in das Tellerrad einkämmt. Infolgedessen sind zwischen dem Pumpenritzel und dem Tellerrad keine zusätzlichen Zahnräder zwischengeschaltet. Das Pumpenritzel greift stattdessen direkt in die Verzahnung des Tellerrades ein. Durch die Nutzung des ohnehin vorhandenen Tellerrades des Getriebes zum Antreiben des Pumpenritzels kann vorteilhafterweise ein zusätzliches Zahnrad eingespart werden, wodurch das Gewicht des Getriebes reduziert werden kann. Des Weiteren können hierdurch auch die Herstellungskosten des Getriebes verringert werden.

Vorteilhaft ist es, wenn das Ritzel als Kegelritzel und/oder das Pumpenritzel als Pumpenkegelritzel ausgebildet ist. Diesbezüglich ist es ferner vorteilhaft, wenn das Tellerrad als Kegeltellerrad ausgebildet ist.

Vorteilhaft ist es, wenn der erste Eingriffsbereich und der zweite Eingriffsbereich auf der gleichen Stirnseite des Tellerrades ausgebildet sind. Hierdurch kann das Getriebe sehr bauraumsparend ausgebildet werden. Alternativ ist es aber auch ebenso vorteilhaft, wenn die beiden Eingriffsbereich auf unterschiedlichen Stirnseiten des Tellerrades ausgebildet sind. Insbesondere wenn die beiden Eingriffsbereich auf unterschiedlichen Stirnseiten des Tellerrades ausgebildet sind, ist es vorteilhaft, wenn diese in einem gleichen Winkelintervall des Tellerrades angeordnet sind. Alternativ ist es aber auch ebenso vorteilhaft, wenn die beiden Eingriffsbereich in Umfangsrichtung des Tellerrades zueinander beabstandet sind, insbesondere wenn diese auf der gleichen Stirnseite des Tellerrades ausgebildet sind. Hierdurch kann das Getriebe leicht an die jeweilige Einbausituation angepasst werden.

Gemäß der Erfindung bildet das Pumpenritzel zusammen mit dem Tellerrad eine Hypoidverzahnung aus. Zusätzlich ist es vorgesehen, dass das Ritzel zusammen mit dem Tellerrad eine Hypoidverzahnung ausbildet. In diesem Zusammenhang ist es demnach vorgesehen, dass in einer Draufsicht des Tellerrades die Drehachse des Pumpenritzels zur Drehachse des Tellerrades einen ersten Achsversatz und die Drehachse des Ritzels zur Drehachse des Tellerrades einen zweiten Achsversatz aufweist. Die vorstehend genannten Drehachsen schneiden sich somit nicht. Hierdurch können die Reibungsverluste reduziert werden, was sich wiederum in einem besseren Wirkungsgrad des Getriebes widerspiegelt. Dies trifft besonders in der Anlaufphase und bei niedrigen Drehzahlen zu.

In diesem Zusammenhang ist es vorteilhaft, wenn der erste Achsversatz des Pumpenritzels und der zweite Achsversatz des Ritzels zueinander gleich groß sind. Infolgedessen weist die Drehachse des Pumpenritzels und die Drehachse des Ritzels zur Drehachse des Tellerrades einen identischen Radialabstand auf. Hierdurch kann das Pumpenritzel und das Ritzel zueinander im Wesentlichen baugleich ausgebildet werden, so dass die Herstellungskosten des Getriebes reduziert werden können.

Zur Erhöhung der Laufruhe und der Belastbarkeit bei gleichzeitiger Platzersparnis ist es vorteilhaft, wenn der erste Achsversatz des Pumpenritzels und der zweite Achsversatz des Ritzels positiv sind. Alternativ dazu können der erste Achsversatz und der zweite Achsversatz aber auch negativ ausgebildet sein.

Um die Herstellungskosten des Getriebes reduzieren zu können, ist es vorteilhaft, wenn das Pumpenritzel und das Ritzel hinsichtlich ihrer Größe, Form und/oder zumindest Grobgeometrie ihrer Verzahnung identisch ausgebildet sind. Unter der Begrifflichkeit "Grobgeometrie" ist vorzugsweise die Genauigkeit der Verzahnungsgeometrie im Millimeterbereich zu verstehen. Die Grobgeometrie betrifft insbesondere die geometrischen Merkmale der Verzahnung wie Außendurchmesser, Zähnezahl, Teilkreisdurchmesser, Modul und Zahnbreite.

Vorteilhaft ist es, wenn die Verzahnung des Pumpenritzels, des Tellerrades und/oder des Ritzels als Schraubenverzahnung, Geradverzahnung oder Schrägverzahnung ausgebildet sind.

Des Weiteren ist es vorteilhaft, wenn die Verzahnung des Pumpenritzels und/oder des Ritzels korrigiert ist, so dass diese zueinander eine unterschiedliche Feingeometrie bzw. Mikrogeometrie aufweisen. Zur Herstellung der "Feingeometrie" ist eine nachträgliche Bearbeitung der Grobgeometrie mit einer Genauigkeit im Mikrometerbereich notwendig. Derartige Korrekturen der Feingeometrie sind beispielsweise kleine Anpassungen der Zahnflanken und der Balligkeit, um beispielsweise Spannungen während des Betriebs zwischen dem Ritzel und dem Tellerrad zu reduzieren und ein möglichst günstiges Tragbild zu erreichen.

Vorteilhaft ist es, wenn die Korrektur der Grobgeometrie zwischen Ritzel und Tellerrad sowohl am Ritzel als auch am Tellerrad eingebracht ist. Zusätzlich oder alternativ ist es vorteilhaft, wenn die Korrektur zwischen Tellerrad und Pumpenritzel ausschließlich am Pumpenritzel eingebracht ist. Hierbei ist es vorteilhaft, wenn das Pumpenritzel derart korrigiert ist, dass ein möglichst großer Traganteil ausgebildet wird. Hierdurch kann vorteilhafterweise die akustische Anregung aufgrund des niedrigen Antriebmoments im Betrieb gering gehalten werden.

Zur weiteren Gewichtsreduktion des Getriebes ist es vorteilhaft, wenn das Pumpenritzel aus einem Kunststoff hergestellt ist. Um zugleich eine ausreichende Verschleißbeständigkeit gewährleisten zu können, ist es vorteilhaft, wenn das aus Kunststoff bestehende Pumpenritzel eine Beschichtung, insbesondere aus einem Metall, aufweist.

Vorteilhaft ist es, wenn das Pumpenritzel, insbesondere über eine kraft-, form-und/oder stoffschlüssige Wellen-Nabenverbindung, drehfest mit einer Pumpenwelle verbunden ist. Hierbei kann die Wellen-Nabenverbindung als Pressverband ausgebildet sein. Alternativ kann diese drehfeste Verbindung zwischen Pumpenritzel und Pumpenwelle über eine Passfeder bewirkt werden. In diesem Fall ist es vorteilhaft, wenn das Pumpenritzel über eine Schraube und/oder über eine Scheibe mit zusätzlichem Sprengring in Axialrichtung gesichert ist.

Vorteilhaft ist es, wenn die Pumpe als Zahnradpumpe oder als Zahnringpumpe ausgebildet ist. Zusätzlich oder alternativ ist es vorteilhaft, wenn auf der Pumpenwelle ein von dieser angetriebener erster Rotor angeordnet ist. Vorzugsweise kämmt dieser in einen passiv mitbewegten zweiten Rotor ein. Hierdurch kann eine entsprechende Förderwirkung eines Fluides erzeugt werden.

Um die Pumpe bei einem Defekt austauschen zu können, ist es vorteilhaft, wenn die Pumpe ein Pumpengehäuse umfasst und/oder in einer Aussparung eines Getriebegehäuses lösbar befestigt ist. Vorzugsweise ist das Pumpengehäuse mit dem Getriebegehäuse verschraubt. Des Weiteren kann zwischen dem Pumpengehäuse und dem Getriebegehäuse eine Einstellungsscheibe angeordnet sein, um das Pumpengehäuse bzw. das Pumpenritzel gegenüber dem Tellerrad während der Montage ausrichten zu können.

Vorteilhaft ist es, wenn die Pumpe derart ausgebildet ist, dass zumindest eine Lagerung des Getriebes, insbesondere eine Lagerung der Pumpenwelle, der Welle des Tellerrades und/oder der Welle des Ritzels, mit einem Schmiermittel, insbesondere einem Öl, versorgbar ist. Diesbezüglich ist es ferner vorteilhaft, wenn in dem Pumpengehäuse und/oder dem Getriebegehäuse Versorgungskanäle ausgebildet sind, durch die das Schmiermittel von der Pumpe zur jeweiligen Lagerung transportierbar ist.

In einer vorteilhaften Weiterbildung der Erfindung weist die Drehachse des Ritzels in einer Seitenansicht des Tellerrades zur Drehachse des Tellerrades einen Winkelversatz auf. Zusätzlich oder alternativ weist in einer Seitenansicht des Tellerrades die Drehachse des Pumpenritzels zur Drehachse des Tellerrades einen Winkelversatz auf. Vorteilhaft ist es, wenn der Winkelversatz des Ritzels und/oder der Winkelversatz des Pumpenritzels einen Steigungswinkel von 90° aufweisen.

Um das Getriebe möglichst bauraumsparend ausbilden zu können, ist es vorteilhaft, wenn der Winkelversatz des Pumpenritzels zu dem des Ritzels gleich groß ist.

Ferner ist es vorteilhaft, wenn das Ritzel drehfest mit einer Antriebswelle und/oder das Tellerrad drehfest mit einer Abtriebswelle verbunden sind. Diesbezüglich ist es vorteilhaft, wenn diese jeweils unmittelbar mit der jeweiligen Welle, d.h. ohne Zwischenschaltung zusätzlicher Zahnräder, verbunden sind.

Nachfolgend ist die Erfindung anhand von Zeichnungen näher erläutert. Es zeigen:
Figur 1 eine Querschnittsansicht durch ein Getriebe mit einem über ein Ritzel antreibbares Tellerrad, das über ein einkämmendes Pumpenritzel eine Pumpe mechanisch antreibt, und
Figur 2 eine Detailansicht des in Figur 1 dargestellten Getriebes im Bereich der durch das Tellerrad mechanisch antreibbaren Pumpe.

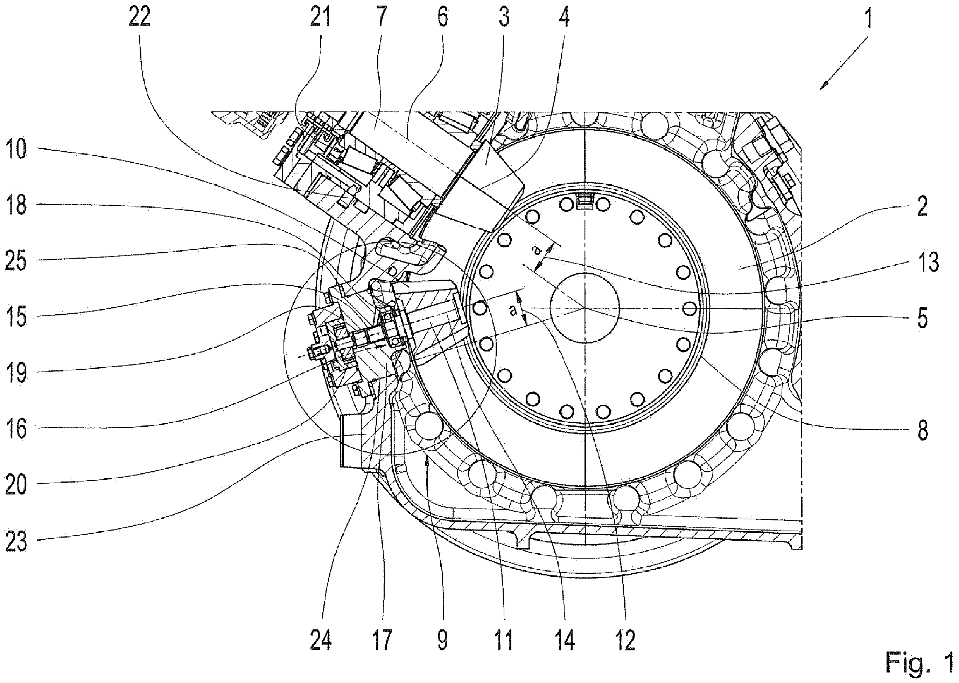

Figur 1 zeigt einen Ausschnitt eines Getriebes 1 im Querschnitt. Bei dem vorliegenden Getriebe handelt es sich insbesondere um ein einstufiges Winkelgetriebe, das vorzugsweise für Kraftfahrzeuge, insbesondere für Elektrofahrzeuge, vorgesehen ist. Das Getriebe kann als Kegelradgetriebe ausgebildet sein. Ferner kann dieses gemäß dem vorliegenden Ausführungsbeispiel als Hypoidgetriebe ausgebildet sein. Das Getriebe umfasst ein in Figur 1 in der Draufsicht dargestelltes Tellerrad 2 und ein Ritzel 3. Das Ritzel 3 kämmt in einem ersten Eingriffsbereich 4 in eine vorliegend nicht weiter im Detail dargestellte Verzahnung des Tellerrades 2 ein. Gemäß dem vorliegenden Ausführungsbeispiel ist das Ritzel 3 als Kegelritzel ausgebildet. Auch das Tellerrad kann als Kegelzahnrad ausgebildet sein.

Die Drehachse 5 des Tellerrades 2 und die Drehachse 6 des Ritzels 3 weisen zueinander einen Winkelversatz auf. Das Getriebe 1 ist demnach als Winkelgetriebe ausgebildet. Der Winkelversatz zwischen der Drehachse 5 des Tellerrades 2 und der Drehachse 6 des Ritzels 3 beträgt im vorliegenden Ausführungsbeispiel 90°.

Wie in Figur 1 ersichtlich ist, weist die Drehachse 6 des Ritzels 3 zusätzlich zum Winkelversatz einen Achsversatz 13 auf. Die Drehachse 6 weist demnach zur Drehachse 5 einen Radialabstand auf. Das Ritzel 3 und das Tellerrad 2 bilden demnach in ihrem ersten Eingriffsbereich 4 eine Hypoidverzahnung aus.

Das Ritzel 3 ist drehfest auf einer ersten Welle 7 angeordnet. Ferner ist das Tellerrad 2 drehfest auf einer zweiten Welle 8 angeordnet. Gemäß dem vorliegenden Ausführungsbeispiel ist die erste Welle 7 als Antriebswelle und die zweite Welle 8 als Abtriebswelle ausgebildet. Das Tellerrad 2 wird demnach über das Ritzel 3 angetrieben. Alternativ kann dies aber auch vertauscht sein.

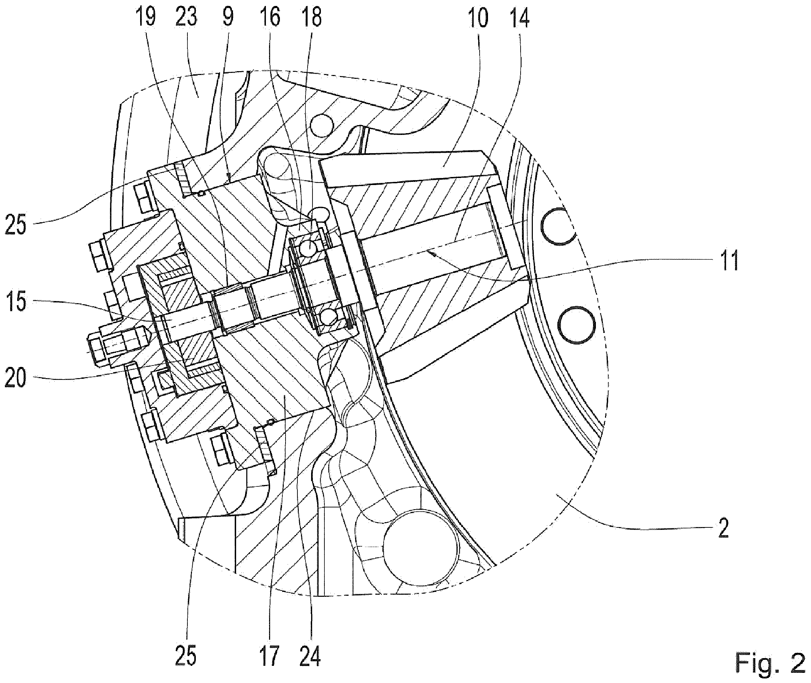

Gemäß Figur 1 umfasst das Getriebe 1 ferner eine Pumpe 9, die in Figur 2 in einer Detailansicht dargestellt ist. Die Pumpe 9 ist derart in das Getriebe 1 integriert, dass diese über das Tellerrad 2 unmittelbar - d.h. ohne Zwischenschaltung zusätzlicher Getriebekomponenten, insbesondere Zahnräder - mechanisch angetrieben werden kann.

Hierfür umfasst die Pumpe 9 ein Pumpenritzel 10, das in die Verzahnung des Tellerrades 2 einkämmt. Das Pumpenritzel 10 ist vorliegend als Pumpenkegelritzel ausgebildet. Zwischen dem Pumpenritzel 10 und dem Tellerrad 2 sind keine zusätzlichen Zahnräder geschalten, so dass das Pumpenritzel 10 unmittelbar in das Tellerrad 2 eingreift. Dies erfolgt in einem zweiten Eingriffsbereich 11. Durch die Nutzung des ohnehin vorhandenen Tellerrades 2 des Getriebes 1 zum Antreiben des Pumpenritzels 10 kann vorteilhafterweise ein zusätzliches Zahnrad eingespart werden, wodurch das Gewicht des Getriebes 1 reduziert werden kann. Des Weiteren können hierdurch auch die Herstellungskosten des Getriebes 1 verringert werden.

Gemäß Figur 1 befinden sich die beiden Eingriffsbereiche 4, 11 des Ritzels 3 und des Pumpenritzel 10 auf derselben Stirnseite des Tellerrades 2. Des Weiteren sind diese zueinander in Umfangsrichtung des Tellerrades 2 beabstandet.

Gemäß Figur 1 ist das Pumpenritzel 10 drehbar um eine Drehachse 14 gelagert. Die Drehachse 14 des Pumpenritzels 10 und die Drehachse 5 des Tellerrades 2 weisen zueinander einen Achsversatz 12 auf. Infolgedessen ist die Drehachse 14 des Pumpenritzels 10 gemäß der in Figur 1 dargestellten Draufsicht radial von der Drehachse 5 des Tellerrades 2 beabstandet. Das Tellerrad 2 und das Pumpenritzel 10 bilden demnach eine Hypoidverzahnung aus.

Gemäß dem vorliegenden Ausführungsbeispiel ist der Radialabstand der Drehachse 14 des Pumpenritzels 10, insbesondere des Pumpenkegelritzels, und der Radialabstand der Drehachse 6 des Ritzels 3 identisch. Das Ritzel 3 und das Pumpenritzel 10 weisen demnach zueinander einen identischen Achsversatz 12, 13 auf.

Wie bereits vorstehend erwähnt, ist das Ritzel 3 vorzugsweise als Kegelritzel und das Pumpenritzel 10 als Pumpenkegelritzel ausgebildet. Gemäß dem vorliegenden Ausführungsbeispiel sind die Kegel der beiden Kegelzahnräder 3, 10 derart ausgebildet, dass der erste und zweite Achsversatz 12, 13 positiv ist.

Des Weiteren sind das Pumpenritzel 10 und das Ritzel 3 hinsichtlich ihrer Größe und Form identisch zueinander ausgebildet. Ferner ist die Grobgeometrie ihrer Verzahnungen zueinander identisch. Hierbei kann die Verzahnung als Geradverzahnung, Schrägverzahnung oder Schraubenverzahnung ausgebildet sein.

Die bis zu einer Genauigkeit im Millimeterbereich identische Grobgeometrie der beiden Verzahnungen des Ritzels 3 und des Pumpenritzel 10 können jedoch im Mikromillimeterbereich voneinander abweichen, so dass diese eine zueinander unterschiedliche Feingeometrie aufweisen. Demnach ist es beispielsweise vorteilhaft, wenn zwischen dem Ritzel 3 und dem Tellerrad 2 eine Korrektur eingebracht ist, über die die Mikrogeometrie ihrer jeweiligen Verzahnung angepasst ist. Ebenso ist es vorteilhaft, wenn auch das Pumpenritzel 10 einer derartigen Korrektur unterzogen ist. Hierbei ist es jedoch im Unterschied vorteilhaft, wenn diese Korrektur ausschließlich am Pumpenritzel 10 eingebracht ist. Hierdurch kann vermieden werden, dass eine zwischen Ritzel 3 und Tellerrad 2 jeweils zumindest anteilig auch in das Tellerrad 2 eingebrachte Korrektur durch eine zusätzliche Korrektur wieder verändert wird. Die Korrektur im zweiten Eingriffsbereich 11 zwischen Pumpenritzel 10 und Tellerrad 2 wird deshalb ausschließlich am Pumpenritzel 10 eingebracht, so dass die Mikrogeometrie des Tellerrades 2 nicht erneut verändert wird.

Neben dem vorstehend genannten Unterschied zwischen dem Ritzel 3 und dem Pumpenritzel 10 in Bezug auf ihre Mikrogeometrie können diese ferner aus unterschiedlichen Materialien ausgebildet sein. Demnach ist es vorteilhaft, wenn das Ritzel 3 vollständig aus einem Metall gefertigt ist. Im Gegensatz dazu kann das Pumpenritzel 10 aus einem Kunststoff hergestellt sein. Um eine hohe Lebensdauer gewährleisten zu können, ist es diesbezüglich ferner vorteilhaft, wenn das Pumpen-ritzel 10 eine den Kunststoff überziehende Beschichtung, insbesondere aus Metall, aufweist.

Wie insbesondere aus Figur 2 hervorgeht, umfasst die Pumpe 9 eine Pumpenwelle 15. Auf dieser ist das Pumpenritzel 10 im Bereich des dem Tellerrad 2 zugewandten Endes drehfest befestigt. Die Verbindung zwischen Pumpenritzel 10 und Pumpenwelle 15 ist vorzugsweise lösbar ausgebildet. Hierfür ist das Pumpenritzel 10 vorzugsweise über eine kraft- und/oder formschlüssige Wellen-Nabenverbindung drehfest mit der Pumpenwelle 15 verbunden. Des Weiteren umfasst die Pumpe 9 eine Lagerung 16, mittels der die Pumpenwelle 15 in einem Pumpengehäuse 17 gelagert ist. Vorliegend umfasst die Lagerung 16 ein dem Pumpenritzel 10 benachbartes Kugellager 18 und ein von diesem axial beabstandetes Nadellager 19.

Im Bereich seines dem Pumpenritzel 10 abgewandten Endes weist die Pumpenwelle 15 einen ersten Rotor 20 auf. Vorliegend ist die Pumpe 9 als Zahnradpumpe ausgebildet. Sie umfasst demnach einen in den Figuren nicht ersichtlichen zweiten Rotor, in den der über das Tellerrad 2, das Pumpenritzel 10 und die Pumpenwelle 15 angetriebene erste Rotor 20 einkämmt. Der vorliegend nicht ersichtliche zweite Rotor wird somit über den ersten Rotor 20 passiv mitbewegt, wodurch in bekannter Art und Weise ein Schmiermittel gefördert werden kann.

Mittels der Pumpe 9 kann die Lagerung 16 der Pumpenwelle 15 selbst, eine Lagerung 21 der Welle 7 des Ritzels 3 und/oder eine vorliegend in den Figuren nicht ersichtliche dritte Lagerung der zweiten Welle 8 des Tellerrades 2 mit einem Schmiermittel versorgt werden. Hierfür weist das Getriebe 1 Versorgungskanäle 22 auf. Diese sind im Getriebegehäuse 23 und/oder im Pumpengehäuse 17 ausgebildet, so dass das Schmiermittel über die Pumpe zu den jeweiligen Lagerungen 16, 21 gefördert werden kann.

Wie in Figur 1 hervorgeht, weist das Getriebegehäuse 23 eine Aussparung 24 auf. Diese erstreckt sich vollständig vom Äußeren des Getriebegehäuses in dessen Inneres. In die Aussparung 24 ist die Pumpe 9 eingesetzt und lösbar befestigt. Hierfür ist das Pumpengehäuse 17 mit dem Getriebegehäuse 23 über Befestigungsmittel, insbesondere Schrauben, lösbar verbunden. Um das Pumpenritzel 10 bei der Montage gegenüber dem Tellerrad 2 optimal ausrichten zu können, sind zwischen dem Getriebegehäuse 23 und dem Pumpengehäuse 17 in den jeweiligen Befestigungsbereichen Einstellungsscheiben 25 angeordnet.

Die vorliegende Erfindung ist nicht auf die dargestellten und beschriebenen Ausführungsbeispiele beschränkt.

### Bezuaszeichen

- 1.: Getriebe
- 2.: Tellerrad
- 3.: Ritzel
- 4.: erster Eingriffsbereich
- 5.: Drehachse des Tellerrades
- 6.: Drehachse des Ritzels
- 7.: erste Welle
- 8.: zweite Welle
- 9.: Pumpe
- 10.: Pumpenritzel
- 11.: zweiter Eingriffsbereich
- 12.: erster Achsversatz
- 13.: zweiter Achsversatz
- 14.: Drehachse des Pumpenritzels
- 15.: Pumpenwelle
- 16.: erste Lagerung
- 17.: Pumpengehäuse
- 18.: Kugellager
- 19.: Nadellager
- 20.: erster Rotor
- 21.: zweite Lagerung
- 22.: Versorgungskanäle
- 23.: Getriebegehäuse
- 24.: Aussparung
- 25.: Einstellungsscheiben

## Patentansprüche

1. Getriebe (1) für ein Kraftfahrzeug, insbesondere für ein Elektrofahrzeug, mit einem Tellerrad (2), einem in das Tellerrad (2) in einem ersten Eingriffsbereich (4) einkämmenden Ritzel (3) und einer mechanisch antreibbaren Pumpe (9), wobei die Pumpe (9) ein Pumpenritzel (10) aufweist, das zusätzlich zum Ritzel (3) in einem zweiten Eingriffsbereich (11) unmittelbar in das Tellerrad (2) einkämmt, wobei der erste und der zweite Eingriffsbereich in Umfangsrichtung des Tellerrades zueinander beabstandet und mit einem Abstand von weniger als 120 Winkelgraden zueinander angeordnet sind, und wobei das Pumpenritzel (10) und das Ritzel (3) mit dem Tellerrad (2) eine Hypoidverzahnung aufweist, wobei in einer Draufsicht des Tellerrades (2) die Drehachse (14) des Pumpenritzels (10) zur Drehachse (5) des Tellerrades (2) einen ersten Achsversatz (12) und die Drehachse (6) des Ritzels (3) zur Drehachse (5) des Tellerrades (2) einen zweiten Achsversatz (13) aufweist.

2. Getriebe nach dem vorherigen Anspruch, **dadurch gekennzeichnet, dass** der erste und zweite Eingriffsbereich (4, 11) auf der gleichen Stirnseite des Tellerrades (2) ausgebildet sind.

3. Getriebe nach dem vorherigen Anspruch 2, **dadurch gekennzeichnet, dass** der erste Achsversatz (12) des Pumpenritzels (10) und der zweite Achsversatz (13) des Ritzels (3) zueinander gleich groß sind und dass der erste Achsversatz (12) des Pumpenritzels (10) und der zweite Achsversatz (13) des Ritzels (3) positiv oder negativ sind.

4. Getriebe nach einem der vorherigen Ansprüche 1 bis 3, **dadurch gekennzeichnet, dass** das Pumpenritzel (10) und das Ritzel (3) hinsichtlich ihrer Größe, Form oder Grobgeometrie ihrer Verzahnung identisch ausgebildet sind.

5. Getriebe nach einem der vorherigen Ansprüche 1 bis 4, **dadurch gekennzeichnet, dass** die Verzahnung des Pumpenritzels (10) und/oder des Ritzels (3) derart korrigiert sind, dass diese zueinander eine unterschiedliche Feingeometrie aufweisen und dass eine Korrektur zwischen Tellerrad (2) und Pumpenritzel (10) ausschließlich am Pumpenritzel (10) eingebracht ist.

6. Getriebe nach einem der vorherigen Ansprüche 1 bis 5, **dadurch gekennzeichnet, dass** das Pumpenritzel (10) aus einem Kunststoff hergestellt ist.

7. Getriebe nach einem der vorherigen Ansprüche 1 bis 6, **dadurch gekennzeichnet, dass** das Pumpenritzel (10), über eine kraft-, form- und/oder stoffschlüssige Wellen-Nabenverbindung drehfest mit einer Pumpenwelle (15) verbunden ist.

8. Getriebe nach einem der vorherigen Ansprüche 1 bis 7, **dadurch gekennzeichnet, dass** die Pumpe (9) als Zahnradpumpe ausgebildet ist und dass auf der Pumpenwelle (15) ein von dieser angetriebener erster Rotor (20) angeordnet ist, der vorzugsweise in einen passiv mitbewegten zweiten Rotor einkämmt.

9. Getriebe nach einem der vorherigen Ansprüche 1 bis 8, **dadurch gekennzeichnet, dass** die Pumpe (9) ein Pumpengehäuse (17) umfasst und/oder in einer Aussparung (24) eines Getriebegehäuses (23) lösbar befestigt ist.

10. Getriebe nach dem vorherigen Anspruch 9, **dadurch gekennzeichnet, dass** in dem Pumpengehäuse (17) und/oder dem Getriebegehäuse (23) Versorgungskanäle (22) ausgebildet sind, so dass zumindest eine Lagerung (16, 21) des Getriebes (1), insbesondere der Pumpenwelle (15), einer Welle (8) des Tellerrades (2) und/oder einer Welle (7) des Ritzels (3), mit einem Schmiermittel versorgbar ist.

11. Getriebe nach einem der vorherigen Ansprüche 1 bis 10, **dadurch gekennzeichnet, dass** das Getriebe (1) einstufig und als Hypoidgetriebe ausgebildet ist.

12. Getriebe nach dem vorherigen Anspruch 11, **dadurch gekennzeichnet, dass** die Drehachse (6) des Ritzels (3) und die Drehachse (14) des Pumpenritzels (10) in einer Seitenansicht des Tellerrades (2) zur Drehachse (5) des Tellerrades (2) einen Winkelversatz mit einem Steigungswinkel von 90° aufweisen.

13. Getriebe nach dem vorherigen Anspruch 12, **dadurch gekennzeichnet, dass** der Winkelversatz des Pumpenritzels (10) zu dem des Ritzels (3) gleich groß ist.

14. Getriebe nach einem der vorherigen Ansprüche 1 bis 12, **dadurch gekennzeichnet, dass** das Ritzel (3) drehfest mit einer Antriebswelle (7) und/oder das Tellerrad (2) drehfest mit einer Abtriebswelle (8) verbunden sind.

## Claims

1. Transmission (1) for a motor vehicle, in particular for an electric vehicle, with a ring gear (2), a pinion (3) meshing in the ring gear (2) in a first engagement region (4), and a mechanically drivable pump (9), wherein the pump (9) has a pump pinion (10) which, in addition to the pinion (3), meshes directly in the ring gear (2) in a second engagement region (11), wherein the first and the second engagement region are spaced apart from each other in the circumferential direction of the ring gear and are arranged at a distance of less than 120 angular degrees with respect to each other, and wherein the pump pinion (10) and the pinion (3) together with the ring gear (2) has a hypoid toothing, wherein, in a top view of the ring gear (2), the axis of rotation (14) of the pump pinion (10) has a first axle offset (12) with respect to the axis of rotation (5) of the ring gear (2), and the axis of rotation (6) of the pinion (3) has a second axial offset (13) with respect to the axis of rotation (5) of the ring gear (2).

2. Transmission according to the preceding claim, **characterized in that** the first and second engagement region (4, 11) are formed on the same end side of the ring gear (2).

3. Transmission according to the preceding Claim 2, **characterized in that** the first axle offset (12) of the pump pinion (10) and the second axle offset (13) of the pinion (3) are identical in size with respect to each other, and **in that** the first axle offset (12) of the pump pinion (10) and the second axle offset (13) of the pinion (3) are positive or negative.

4. Transmission according to one of the preceding Claims 1 to 3, **characterized in that** the pump pinion (10) and the pinion (3) are formed identically in respect of their size, shape or rough geometry of their toothing.

5. Transmission according to one of the preceding Claims 1 to 4, **characterized in that** the toothing of the pump pinion (10) and/or of the pinion (3) are adjusted in such a manner that they have a different fine geometry with respect to each other, and **in that** an adjustment between ring gear (2) and pump pinion (10) is introduced exclusively to the pump pinion (10).

6. Transmission according to one of the preceding Claims 1 to 5, **characterized in that** the pump pinion (10) is produced from a plastic.

7. Transmission according to one of the preceding Claims 1 to 6, **characterized in that** the pump pinion (10) is connected to a pump shaft (15) for rotation therewith via a force-fitting, form-fitting and/or integrally bonded shaft and hub connection.

8. Transmission according to one of the preceding Claims 1 to 7, **characterized in that** the pump (9) is designed as a gear pump, and **in that** a first rotor (20) is arranged on the pump shaft (15), said first rotor being driven by the latter and preferably meshing in a second rotor moved passively at the same time.

9. Transmission according to one of the preceding Claims 1 to 8, **characterized in that** the pump (9) comprises a pump housing (17) and/or is fastened releasably in a recess (24) of a transmission housing (23).

10. Transmission according to the preceding Claim 9, **characterized in that** supply channels (22) are formed in the pump housing (17) and/or the transmission housing (23), and therefore at least one bearing (16, 21) of the transmission (1), in particular of the pump shaft (15), of a shaft (8) of the ring gear (2) and/or of a shaft (7) of the pinion (3), can be supplied with a lubricant.

11. Transmission according to one of the preceding Claims 1 to 10, **characterized in that** the transmission (1) is a single-stage transmission and is designed as a hypoid transmission.

12. Transmission according to the preceding Claim 11, **characterized in that**, in a side view of the ring gear (2), the axis of rotation (6) of the pinion (3) and the axis of rotation (14) of the pump pinion (10) have an angular offset with a pitch angle of 90° with respect to the axis of rotation (5) of the ring gear (2).

13. Transmission according to the preceding Claim 12, **characterized in that** the angular offset of the pump pinion (10) is identical in size to that of the pinion (3).

14. Transmission according to one of the preceding Claims 1 to 12, **characterized in that** the pinion (3) is connected to a drive shaft (7) for rotation therewith and/or the ring gear (2) is connected to an output shaft (8) for rotation thereof.

## Revendications

1. Boîte de vitesses (1) pour un véhicule automobile, en particulier pour un véhicule électrique, comprenant une couronne de différentiel (2), un pignon (3) s'engrenant dans la couronne de différentiel (2) dans une première zone d'engrènement (4) et une pompe (9) pouvant être entraînée mécaniquement, dans laquelle la pompe (9) présente un pignon de pompe (10) qui s'engrène en plus du pignon (3) directement dans la couronne de différentiel (2) dans une deuxième zone d'engrènement (11), dans laquelle la première et la deuxième zone d'engrènement sont disposées dans la direction circonférentielle de la couronne de différentiel en étant espacées l'une de l'autre et à une distance inférieure à 120 degrés d'angle l'une par rapport à l'autre, et dans laquelle le pignon de pompe (10) et le pignon (3) présentent une denture hypoïde avec la couronne de différentiel (2), dans laquelle, dans une vue de dessus de la couronne de différentiel (2), l'axe de rotation (14) du pignon de pompe (10) présente un premier décalage axial (12) par rapport à l'axe de rotation (5) de la couronne de différentiel (2), et l'axe de rotation (6) du pignon (3) présente un deuxième décalage axial (13) par rapport à l'axe de rotation (5) de la couronne de différentiel (2).

2. Boîte de vitesses selon la revendication précédente, **caractérisée en ce que** la première et la deuxième zone d'engrènement (4, 11) sont réalisées sur la même face frontale de la couronne de différentiel (2) .

3. Boîte de vitesses selon la revendication précédente 2, **caractérisée en ce que** le premier décalage axial (12) du pignon de pompe (10) et le deuxième décalage axial (13) du pignon (3) sont identiques, et **en ce que** le premier décalage axial (12) du pignon de pompe (10) et le deuxième décalage axial (13) du pignon (3) sont positifs ou négatifs.

4. Boîte de vitesses selon l'une quelconque des revendications précédentes 1 à 3, **caractérisée en ce que** le pignon de pompe (10) et le pignon (3) sont réalisés de manière identique quant à leur dimension, à leur forme ou à la géométrie approximative de leur denture.

5. Boîte de vitesses selon l'une quelconque des revendications précédentes 1 à 4, **caractérisée en ce que** la denture du pignon de pompe (10) et/ou la denture du pignon (3) sont corrigées de telle sorte qu'elles présentent une géométrie précise différente l'une par rapport à l'autre, et **en ce qu'**une correction entre la couronne de différentiel (2) et le pignon de pompe (10) est introduite exclusivement au niveau du pignon de pompe (10).

6. Boîte de vitesses selon l'une quelconque des revendications précédentes 1 à 5, **caractérisée en ce que** le pignon de pompe (10) est fabriqué en matière plastique.

7. Boîte de vitesses selon l'une quelconque des revendications précédentes 1 à 6, **caractérisée en ce que** le pignon de pompe (10) est relié à un arbre de pompe (15) de manière solidaire en rotation par un raccordement arbre-moyeu par adhérence, par complémentarité de forme et/ou par liaison de matière.

8. Boîte de vitesses selon l'une quelconque des revendications précédentes 1 à 7, **caractérisée en ce que** la pompe (9) est réalisée comme une pompe à engrenages, et **en ce qu'**un premier rotor (20) est disposé sur l'arbre de pompe (15) qui peut être entraîné par celui-ci et qui s'engrène de préférence dans un deuxième rotor qui est déplacé en même temps de manière passive.

9. Boîte de vitesses selon l'une quelconque des revendications précédentes 1 à 8, **caractérisée en ce que** la pompe (9) comprend un boîtier de pompe (17) et/ou est fixée de manière amovible dans un évidement (24) d'un carter de boîte de vitesses (23).

10. Boîte de vitesses selon la revendication précédente 9, **caractérisée en ce que** des canaux d'alimentation (22) sont réalisés dans le boîtier de pompe (17) et/ou le carter de boîte de vitesses (23), de sorte qu'au moins un logement (16, 21) de la boîte de vitesses (1), en particulier de l'arbre de pompe (15), d'un arbre (8) de la couronne de différentiel (2) et/ou d'un arbre (7) du pignon (3), peut être alimenté en lubrifiant.

11. Boîte de vitesses selon l'une quelconque des revendications précédentes 1 à 10, **caractérisée en ce que** la boîte de vitesses (1) est à un seul étage et réalisée comme un engrenage hypoïde.

12. Boîte de vitesses selon la revendication précédente 11, **caractérisée en ce que** l'axe de rotation (6) du pignon (3) et l'axe de rotation (14) du pignon de pompe (10), dans une vue latérale de la couronne de différentiel (2), présentent un décalage d'angle d'un angle de pente de 90° par rapport à l'axe de rotation (5) de la couronne de différentiel (2).

13. Boîte de vitesses selon la revendication précédente 12, **caractérisée en ce que** le décalage d'angle du pignon de pompe (10) par rapport au pignon (3) est identique.

14. Boîte de vitesses selon l'une quelconque des revendications précédentes 1 à 12, **caractérisée en ce que** le pignon (3) est relié de manière solidaire en rotation à un arbre d'entraînement (7) et/ou la couronne de différentiel (2) est reliée de manière solidaire en rotation à un arbre de sortie (8).
